# EUROPÄISCHE PATENTSCHRIFT

(11) **EP 3 321 498 B1**
(45) Veröffentlichungstag und Bekanntmachung des Hinweises auf die Patenterteilung: **04.03.2020**
(21) Anmeldenummer: 16400051.5
(22) Anmeldetag: 10.11.2016
(51) Int. Cl.: B01D 29/58

(54) **SAUGKOPF ZUM ANSCHLUSS AN EINEN KRAFTSTOFFSCHLAUCH**
SUCTION HEAD FOR CONNECTION TO A FUEL HOSE
CRÉPINE D'ASPIRATION POUR LE RACCORDEMENT SUR UN TUYAU DE CARBURANT

(43) Veröffentlichungstag der Anmeldung: 16.05.2018
(73) Patentinhaber: Andreas Stihl AG & Co. KG, 71336 Waiblingen (DE)
(72) Erfinder: RIEHMANN, Jens, 70176 Stuttgart (DE); SCHLIEMANN, Harald, 71334 Waiblingen (DE); DANGELMAIER, Manuel, 73207 Plochingen (DE)
(74) Vertreter: Wasmuth, Rolf

(56) Entgegenhaltungen:
- EP-A2- 2 597 295
- DE-A1- 19 860 391
- DE-A1- 19 953 986
- DE-A1-102011 003 645
- DE-U1-202013 003 527
- US-A- 3 841 489
- US-A1- 2005 150 826

## Beschreibung

Die Erfindung betrifft einen Saugkopf zum Anschluss an einen Kraftstoffschlauch in einem Kraftstofftank. Der Saugkopf besteht aus einem gehäuseförmigen Grundkörper aus einem Spritzgussmaterial, wobei der Grundkörper eine stirnseitige Öffnung aufweist, die mittels einer aufzusetzenden Kappe verschlossen ist. Der Saugkopf weist einen Anschlussstutzen für den Kraftstoffschlauch auf, wobei der Anschlussstutzen an dem Grundkörper oder der Kappe angeformt sein kann. In dem Grundkörper des Saugkopfes ist ein erstes Filterelement aufgenommen, wobei der Grundkörper in seiner Mantelfläche Aussparungen aufweist, die durch ein zweites Filterelement abgedeckt sind.

Derartige aus der DE 199 53 986 A1 bekannte Saugköpfe mit Filtereigenschaften werden bevorzugt in getragenen Arbeitsgeräten mit einem Zweitaktmotor, einem Viertaktmotor oder einem gemischgeschmierten Viertaktmotor als Antriebsmotor eingesetzt. Aufgrund der Anbindung an einen flexiblen Kraftstoffschlauch liegt der Saugkopf an der tiefsten Stelle des Kraftstofftanks und gewährleistet so eine lageunabhängige Kraftstoffzufuhr zu dem Verbrennungsmotor.

Im Betrieb des Verbrennungsmotors fließt über den Saugkopf einer Gemischbildungseinrichtung ein flüssiges Kraftstoff/Öl-Gemisch zu, das zunächst durch das äußere Filterelement und dann durch das innere Filterelement und den Kraftstoffschlauch zur Gemischbildungseinrichtung strömt. Schmutzpartikel werden überwiegend an dem äußeren Filterelement zurückgehalten, wobei die glatte Seite des aus Filtergewebe bestehenden äußeren Filterelementes die Bildung eines Filterkuchens begünstigt. Haben sich abgesetzte Schmutzpartikel zu einem Filterkuchen verbunden, ist ein Ablösen vom Filtergewebe durch Bewegung und Vibration des Saugkopfes kaum mehr möglich. Der Strömungswiderstand des Saugkopfes steigt an, und die Kraftstoffförderung sinkt, so dass es zu Störungen beim Betrieb des Verbrennungsmotors kommen kann. Beispielsweise können bei handgetragenen Arbeitsgeräten, die einen Vergaser mit einem elektromagnetischen Ventil aufweisen, Schmutzpartikel das elektromagnetische Ventil in der Funktion beeinträchtigen.

Aus der DE 20 2013 003 527 U1 ist ein Filtermedium bekannt, das aus einem Filtergewebe in Köperbindung mit einer Maschenweite von 5 µm bis 150 µm besteht.

Die DE 10 2011 003 645 A1 offenbart ein Zusatzfilterelement auf der Reinseite eines Ölfilters, um zu verhindern, dass bei einem Filterwechsel auf der Reinseite befindliche Schmutzpartikel in den Ölkreislauf gelangen.

Der Erfindung liegt die Aufgabe zugrunde, einen Saugkopf der gattungsgemäßen Art derart weiterzubilden, dass bei hoher Filterwirkung über eine lange Betriebsdauer der Strömungswiderstand des Saugkopfes nicht unerwünscht ansteigt.

Diese Aufgabe wird nach den Merkmalen des Anspruchs 1 gelöst.

Das zweite, äußere Filterelement besteht aus einem in Köperbindung oder Atlasbindung gefertigten Filtergewebe, wobei das Filtergewebe mit einer Maschenweite größer als 10 µm und kleiner als 25 µm ausgebildet ist. Die sehr kleine Maschenweite gewährleistet eine hohe Filterwirkung und verhindert ein Eindringen von Schmutz in das Kraftstoffsystem der Gemischbildungseinrichtung. Das in Köperbindung oder Atlasbindung gefertigte Gewebe hat eine dreidimensionale Struktur, so dass die dem anströmenden Kraftstoff zugewandte Gewebefläche rau und mehrdimensional strukturiert ist. Die dreidimensionale Gewebeoberfläche verhindert eine Verbindung zurückgehaltener Schmutzteilchen zu einem Filterkuchen. Dennoch ist eine hohe Filterwirkung gegeben, ohne dass der Strömungswiderstand des Saugkopfes auch nach längeren Betriebszeiten nachteilig ansteigt. Dies liegt auch darin begründet, dass die Maschenweite des - äußeren - Filtergewebes kleiner ist als die Porengröße des ersten - inneren - Filterelementes im Gehäuse. Von außen nach innen weist der Saugkopf eine größer werdende Porengröße/Maschenweite der Filterelemente auf.

Da die dreidimensionale Gewebestruktur der Bildung eines Filterkuchens entgegenwirkt, führen Bewegungen und vom Verbrennungsmotor auf den Saugkopf übertragene Vibrationen zu einem Abwerfen anhaftender Schmutzpartikel, so dass trotz geringer Maschenweite im Bereich von 10 µm bis 25 µm ein signifikantes Zusetzen des Filtergewebes nicht oder nur reduziert auftritt.

Auch bei einer weiteren Verringerung der Maschenweite auf einen Bereich von 12 µm bis 20 µm konnte eine hohe Standzeit des Saugkopfes ohne Beeinträchtigung des Strömungswiderstandes festgestellt werden. Vorteilhaft wird eine Maschenweite von 15 µm verwendet. Über eine lange Betriebsdauer kann der Strömungswiderstand des Saugkopfes gleich gehalten werden.

Die im Grundkörper des Sauggehäuses vorgesehenen Aussparungen in der Mantelfläche des Grundkörpers sind durch Stege voneinander getrennt. Die Aussparungen können beispielswiese als fensterartige Aussparungen ausgebildet sein. Der Grundkörper wird in Spritzgusstechnik erstellt, wobei in die Spritzgussform zunächst das Filtergewebe eingelegt wird und dann das Spritzgussmaterial eingebracht wird. Das Filtergewebe wird im Bereich der Stege von diesen gehalten. Vorteilhaft verbindet sich das Filtergewebe im Bereich der Stege mit dem Material der Stege. Insbesondere greift das Spritzgussmaterial des Grundkörpers im Bereich der Stege in die Gewebestruktur des Filtergewebes formschlüssig ein. Das Filtergewebe ist vorteilhaft an den Stegen formschlüssig gehalten. Das Filtergewebe ist insbesondere im Bereich der Stege durch das eingespritzte Spritzgussmaterial fixiert.

In besonderer Ausgestaltung der Erfindung ist das Filtergewebe als Filterschlauch mit einem ersten offenen Ende und einem zweiten offenen Ende ausgebildet. Der Filterschlauch ist einfach in eine Spritzgussform einzulegen. Ein Ende des Filterschlauches ist im Spritzgussmaterial des Grundkörpers stoffdicht eingebunden. Bevorzugt ist das Ende des Filterschlauches im Spritzgussmaterial des Bodens des Grundkörpers stoffdicht eingebunden. Vorteilhaft wird der Filterschlauch derart angeordnet, dass eine Naht des Filterschlauchs im Bereich eines Steges liegt. Die Naht des Filterschlauchs ist im Bereich des Steges vorteilhaft formschlüssig gehalten. Durch diese bevorzugte Anordnung ist die Naht des Filterschlauchs vor Verschleiß geschützt.

Eine filterdichte Verbindung wird erreicht, wenn das Filtergewebe am Ende des Filterschlauches von dem Spritzgussmaterial des Grundkörpers formschlüssig durchdrungen ist.

Zweckmäßig liegt die Porengröße des ersten Filterelementes in einem Größenbereich von 30 µm bis 70 µm.

Das Spritzgussmaterial, aus dem der Grundkörper und die Kappe des zusammengesetzten Saugkopfes gebildet sind, besteht bevorzugt aus Kunststoff. Das Filtergewebe ist in Weiterbildung der Erfindung als Siebgewebe aus monofilen Einzelfäden gefertigt. Die Einzelfäden können aus Polyamid bestehen. Die Fadenstärke der Einzelfäden ist bevorzugt größer als die Maschenweite des Filtergewebes, insbesondere weisen die Einzelfäden eine Fadenstärke von 35 µm auf.

Vorteilhaft wird der erfindungsgemäße Saugkopf bei einem Arbeitsgerät mit einem Viertaktmotor verwendet, der einen Ventiltrieb für im Brennraum des Viertaktmotors angeordnete Ein- und/oder Auslassventile aufweist. Der Ventiltrieb ist durch ein mit Verbrennungsluft aufbereitetes Kraftstoff/Öl-Gemisch geschmiert, wobei das Kraftstoff/Öl-Gemisch über eine Kraftstoffleitung aus einem Kraftstofftank des Arbeitsgerätes einer Gemischbildungseinrichtung zugeführt ist. Die Kraftstoffleitung ragt mit einem flexiblen Kraftstoffschlauch in den Kraftstofftank ein, wobei das einragende freie Ende des flexiblen Kraftstoffschlauches an den Anschlussstutzen des Saugkopfes nach Anspruch 1 angeschlossen ist.

Insbesondere bei einer Ausführung des Saugkopfes mit einem äußeren Filtergewebe mit einer Maschenweite von 15 µm konnte ein Eindringen von Schmutz in den durch ein Kraftstoff/Öl/Luft-Gemisch geschmierten Ventiltrieb zuverlässig verhindert werden. Dadurch ist einem Verschleiß des Ventiltriebes durch über das Kraftstoff/Öl-Gemisch eindringenden Schmutz entgegengewirkt.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine Rückansicht eines Blasgerätes als Beispiel eines Arbeitsgerätes mit einem Viertaktmotor,
- Fig. 2: eine Seitenansicht mit einem Teilschnitt eines Saugkopfes zum Anschluss an einen Kraftstoffschlauch,
- Fig. 3: einen Schnitt durch den Saugkopf längs der Linie III-III in Fig. 2,
- Fig. 4: in Explosionsdarstellung die Grundbauteile eines Saugkopfes nach Fig. 2,
- Fig. 5: in schematischer Ansicht einen Ausschnitt eines Filtergewebes in Köperbindung,
- Fig. 6: in schematischer Ansicht einen Ausschnitt eines Filtergewebes in Atlasbindung,
- Fig. 7: in schematischer Darstellung einen Ausschnitt eines Filtergewebes in einer Köperbindung bevorzugter Ausführungsform.

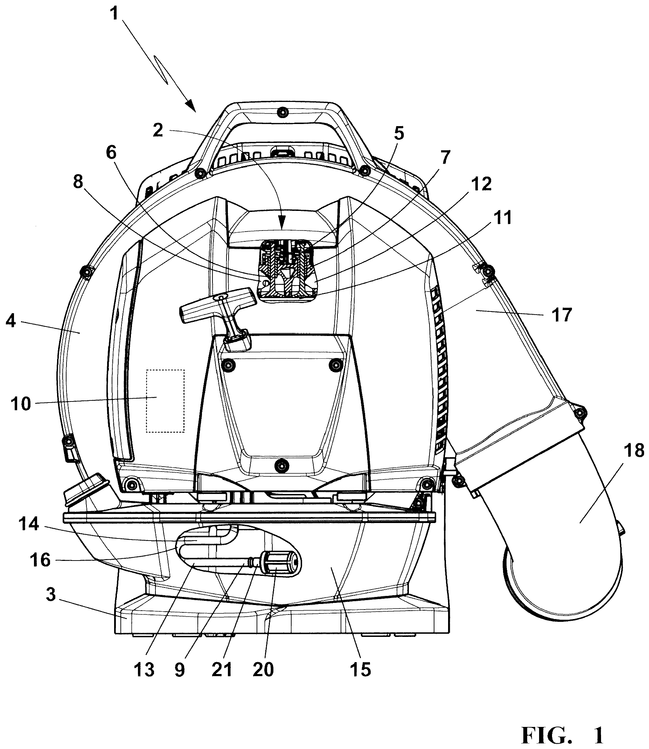

In Fig. 1 ist als Beispiel eines Arbeitsgerätes 1 ein Blasgerät in einer Ansicht von hinten dargestellt. Mit der Bezeichnung "Arbeitsgerät" sind tragbare, handgeführte Arbeitsgeräte mit einem Verbrennungsmotor bezeichnet, z. B. eine Motorkettensäge, eine Heckenschere, ein Trennschleifer oder dgl. Arbeitsgerät.

Als Antriebsmotor des Arbeitsgerätes 1 nach dem Ausführungsbeispiel ist ein Verbrennungsmotor, insbesondere ein Viertaktmotor 2 vorgesehen. Das beispielhaft gezeigte Blasgerät besteht im Wesentlichen aus einer bevorzugt L-förmigen Trage 3, an der das Blasgerät schwingungsgedämpft gehalten ist. Ein in einem Gebläsegehäuse 4 angeordnetes Lüfterrad wird von dem Viertaktmotor 2 angetrieben, der alternativ auch als Zweitaktmotor oder dergleichen Antriebsmotor ausgebildet sein kann.

Das Gebläsegehäuse 4 weist einen Gebläseauslass 17 auf, der mit einem Anschlussstutzen 18 für ein Blasrohr versehen ist.

Der im Ausführungsbeispiel schematisch angedeutete Viertaktmotor 2 weist einen Ventiltrieb 5 auf, der ein Einlassventil 6 und ein Auslassventil 7 steuert. Das Einlassventil 6 steuert den Einlass eines frischen Kraftstoff/Öl/Luft-Gemisches, das über einen Einlasskanal 8 zugeführt ist. Der Einlasskanal 8 ist mit einer Gemischbildungseinrichtung 10 verbunden, die vorteilhaft als Membranvergaser ausgebildet ist und das Kraftstoff/Öl/Luft-Gemisch zum Eintritt in den Brennraum 11 bereitstellt. Über ein Auslassventil 7 wird Abgas über einen Auslasskanal 12 abgeführt.

Der Gemischbildungseinrichtung 10 ist aus einem Kraftstofftank 15 ein Kraftstoff/Öl-Gemisch zugeführt, wobei das Kraftstoff/Öl-Gemisch über einen Kraftstoffschlauch 14 und einen Saugkopf 20 aus dem Kraftstofftank 15 angesaugt wird. Zweckmäßig kann zur Förderung des Kraftstoff/Öl-Gemischs eine Kraftstoffpumpe vorgesehen sein. Vorteilhaft wird die Kraftstoffpumpe von den Druckschwingungen des Kurbelgehäuses angetrieben.

Der Kraftstoffschlauch 14 hat zumindest einen flexiblen Schlauchabschnitt 13, dessen freies Ende 9 auf einem Anschlussstutzen 21 des Saugkopfes 20 festgelegt ist. Zur Erzielung einer hohen Beweglichkeit des Saugkopfes 20 im Kraftstofftank 15 kann es zweckmäßig sein, den beweglichen Kraftstoffschlauch 14 in - insbesondere flexiblen - Schlaufen 16 zu führen.

Der Saugkopf 20 besteht im Wesentlichen aus einem Gehäuse mit einem Grundkörper 22. Der Grundkörper 22 weist vorteilhaft eine becherförmige Form auf. Am offenen Ende 23 des Grundkörpers 22 ist eine stirnseitige Öffnung 24 ausgebildet. Zwischen dem Boden 25 des Grundkörpers 22 und dem offenen Ende 23 sind in der Mantelfläche 26 des Grundkörpers 22 Aussparungen 30, 31, 32 und 33 ausgebildet. Die Aussparungen 30, 31, 32 und 33 bilden in der Mantelfläche 26 des Grundkörpers 22 von einem geschlossenen Rahmen umgebene Fenster. Die Aussparungen 30, 31, 32 und 33 erstrecken sich über einen Umfangswinkel 34 von insbesondere 70°. Die Aussparungen 30, 31, 32, 33 sind in Umfangsrichtung des becherförmigen Grundkörpers 22 durch Stege 40, 41, 42, 43 voneinander getrennt. Ein Steg 40, 41, 42, 43 erstreckt sich über einen Umfangswinkel von insbesondere 20°.

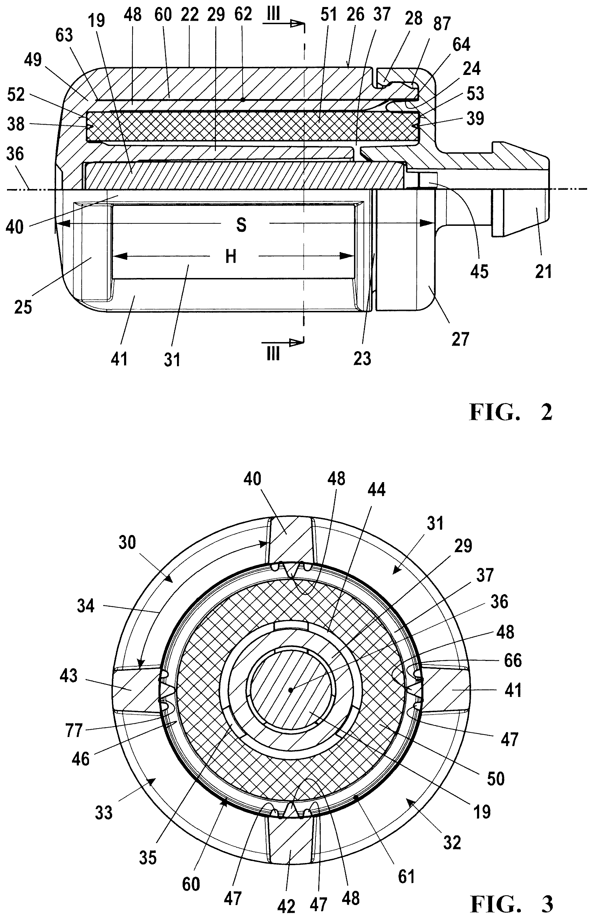

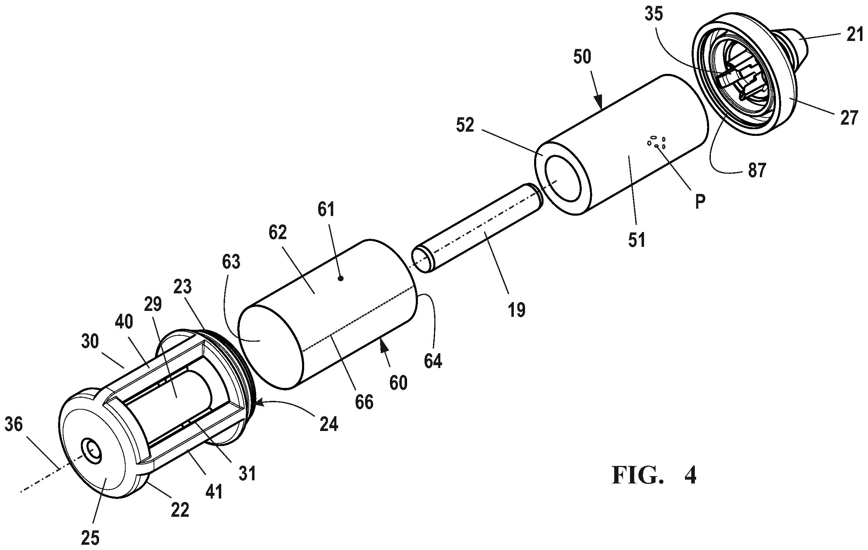

Wie die Figuren 2 und 4 zeigen, hat im Ausführungsbeispiel jede Aussparung eine in Richtung der Längsmittelachse 36 des Saugkopfes 20 gemessene gleiche Höhe H, die etwa 60% bis 70% der in gleicher Richtung gemessenen Höhe S des Saugkopfes 20 beträgt.

Das offene Ende 23 des Grundkörpers 22 wird von einer Kappe 27 übergriffen, die in einen Hinterschnitt 28 am offenen Ende 23 des Grundkörpers 22 verrastet. Die Kappe 27 trägt vorzugsweise zentral den Anschlussstutzen 21 für den Kraftstoffschlauch 14. Der Rand des offenen Endes 23 des Grundkörpers 22 wird vorteilhaft in einer Aufnahmenut 87 der Kappe 27 gehalten.

Im Innenraum des Grundkörpers 22 ist ein rohrförmiger Aufnahmezylinder 29 ausgebildet, der zentral auf dem Boden 25 des Grundkörpers 22 steht. Der Aufnahmezylinder 29 endet mit Abstand vor dem offenen Ende 23 und dient der Aufnahme eines Gewichtes, im Ausführungsbeispiel vorteilhaft in Form eines Gewichtsstabes 19. Das aus dem Aufnahmezylinder 29 herausragende Ende des Gewichtsstabes 19 wird in einer klauenartigen Aufnahme 35 auf der Innenseite der aufgesetzten Kappe 27 gehalten. Die Mittelachse des zylinderförmigen Gewichtsstabs 19 liegt vorteilhaft in der Längsmittelachse 36 des Saugkopfes 20.

Im Innenraum 37 des Saugkopfes 20 ist ein erstes Filterelement 50 angeordnet, welches aus einem rohrförmigen Sinterkörper 51 gebildet ist. Der Sinterkörper 51 (Fig. 4) hat eine Porengröße P von ca. 30 µm bis 80 µm, insbesondere in einer Größe von 60 µm. Der Sinterkörper 51 verhindert ein Eindringen von Luftbläschen in den Kraftstoffschlauch 14 und insbesondere in die Gemischbildungseinrichtung 10.

An seinen ringförmigen Stirnflächen 52 und 53 ist der Sinterkörper 51 vorteilhaft durch Haltedorne 38 des Bodens 25 und Haltedorne 39 der Kappe 27 fixiert gehalten. Das als Sinterkörper 51 ausgebildete erste - innere - Filterelement 50 ist spielfrei innerhalb des Grundkörpers 22 gehalten. Zwischen dem Aufnahmezylinder 29 und dem Sinterkörper 51 verbleibt ein Ringspalt 44, der über eine Strömungsöffnung 45 in der Kappe 27 mit dem Anschlussstutzen 21 in Strömungsverbindung steht.

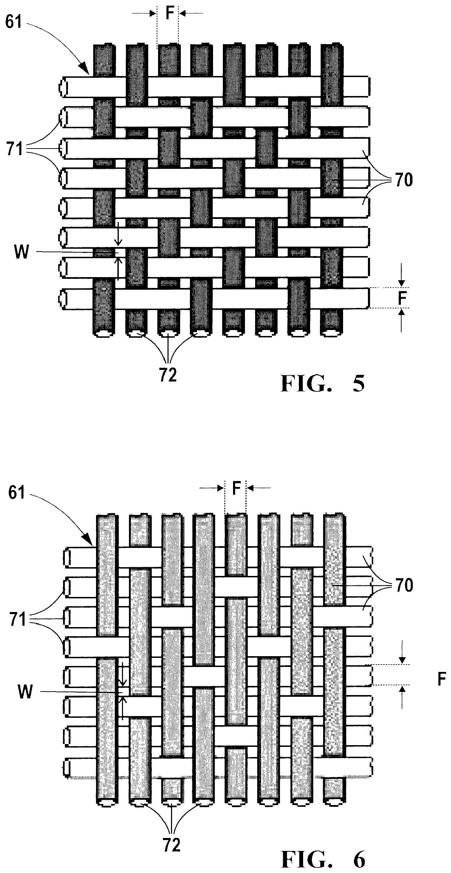

Die Aussparungen 30, 31, 32, 33 sind am Innenumfang der Stege 40, 41, 42, 43 durch ein zweites - äußeres - Filterelement 60 abgedeckt. Das zweite Filterelement 60 besteht aus einem Filtergewebe 61, dessen Gewebeaufbau in den Figuren 5 bis 7 schematisch wiedergegeben ist. Das Filtergewebe 61 hat aufgrund des Gewebeaufbaus eine dreidimensionale Struktur. Das Filtergewebe 61 ist am Innenumfang 46 der Stege 40, 41, 42, 43 gehalten. Bevorzugt klebt das Filtergewebe an den Stegen 40, 41, 42 und 43; insbesondere ist das Filtergewebe 61 von dem Spritzgussmaterial des Grundkörpers 22 an den Stegen 40, 41, 42, 43 gehalten. In bevorzugter Ausführungsform greift das Spritzgussmaterial der Stege 40, 41, 42, 43 formschlüssig in die dreidimensionale Struktur des Filtergewebes 61 ein. Dies ist in Fig. 3 durch die angedeuteten radialen Nasen 47 am Innenumfang 46 der Stege 40, 41, 42 und 43 dargestellt.

Zur Lagefixierung des Sinterkörpers 51 des ersten Filterelementes 50 sind am Innenumfang 46 der Stege 40 bis 43 vorteilhaft Halterippen 48 ausgebildet, wie auch die Figuren 2 und 3 zeigen. Die Halterippen 48 liegen einander jeweils diametral gegenüber, so dass das Filterelement 50 bzw. dessen Sinterkörper 51 über den Umfang von vier Halterippen 48 insbesondere zur Längsmittelachse 36 zentral fixiert ist. Die Halterippen 48 haben in Umfangsrichtung einen Umfangsabstand von vorzugsweise 90° zueinander.

Über den Umfang des Grundkörpers 22 sind vier Stege 40, 41, 42, 43 mit insbesondere gleichen Umfangsabständen zueinander vorgesehen. Entsprechend sind über den Innenumfang 46 der Stege 40, 41, 42, 43 vier Halterippen 48 ausgebildet. Die Halterippen 48 liegen mit gleichen Umfangsabständen zueinander.

Das Filtergewebe 61 des - äußeren - zweiten Filterelementes 60 ist bevorzugt als Filterschlauch 62 ausgebildet, wie Fig. 4 zeigt. Der Filterschlauch hat ein erstes offenes Ende 63 und ein zweites offenes Ende 64. Ein offenes Ende 63, 64 des Filterschlauches 62 ist bevorzugt bei der Fertigung des Grundkörpers 22 im Spritzgussmaterial 49 des Grundkörpers 22 stoffdicht eingebunden.

Wie Fig. 2 zeigt, liegt das erste offene Ende 63 des Filterschlauches 62 im Material des Bodens 25 des Grundkörpers 22 eingebunden. Das Spitzgussmaterial 49, welches insbesondere ein Kunststoff ist, umgreift das erste offene Ende 63 des Filterschlauches 62, so dass bei der Fertigung des Grundkörpers 22 das erste offene Ende 63 des Filterschlauches 62 vom Spritzgussmaterial 49 umflossen ist und nach der Erhärtung des Spritzgussmaterials 49 stoffdicht im Boden 25 des Grundkörpers 22 gehalten ist. Das Spritzgussmaterial 49 umgreift nicht nur das erste offene Ende 63 des Filterschlauches 62, sondern dringt auch in das Filtergewebe 61 des Filterschlauches 62 ein. Dadurch ist ergänzend ein formschlüssiger Halt des ersten offenen Endes 63 des Filterschlauches 62 gegeben.

Das zweite offene Ende 64 des Filterschlauches 62 liegt im offenen Ende 23 des Grundkörpers 22. Der Rand des zweiten offenen Endes 23 des Grundkörpers 22 wird in der Aufnahmenut 87 der Kappe 27 gehalten, wobei das zweite offene Ende 64 des Filterschlauches 62 innerhalb der Aufnahmenut 87 zu liegen kommt.

Zur Fertigung eines Filterschlauches 62 kann eine Gewebelage umgeschlagen und verschweißt werden, wodurch eine Naht 66 (Fig. 4) entsteht. Es kann zur kostengünstigen Fertigung eines Filterschlauches 62 auch vorgesehen sein, zwei Gewebelagen aufeinanderzulegen, um durch zwei Schweißnähte einen Filterschlauch 62 auszubilden. Diese beiden Schweißnähte liegen - bezogen auf eine Längsmittelachse des Filterschlauches - einander vorzugsweise diametral gegenüber und bilden jeweils eine Naht 66.

Der Filterschlauch 62 wird vorteilhaft bei der Fertigung des Grundkörpers 22 derart angeordnet, dass die sich in Längsrichtung des Filterschlauches 62 von dem ersten Ende 63 bis zum zweiten Ende 64 erstreckende Naht 66 (Fig. 4) im Bereich eines Steges 41 liegt. Die Naht 66 des Filterschlauchs 62 ist im Bereich des Steges 41 (Fig. 3) vorteilhaft formschlüssig gehalten. Durch diese bevorzugte Anordnung ist die Formstabilität des Filterschlauches 62 gewährleistet. Die bevorzugte Anordnung stellt auch die Dichtheit des Filterschlauches 62 im Grundkörper 22 sicher. Auch wird durch die bevorzugte Anordnung die Naht 66 des Filterschlauchs 62 vor Verschleiß geschützt.

Die Stege 40 und 42 sowie die Stege 41 und 43 liegen - bezogen auf die Längsmittelachse 36 des Saugkopfes 23 - einander diametral gegenüber (Fig. 3). Ein Filterschlauch 62 mit zwei Nähten 66, 77 liegt derart im Grundkörper 22, dass beide einander gegenüberliegenden Nähte 66, 77 jeweils im Bereich eines Steges 41 bzw. 43 liegen. So können beide Nähte 66, 77 des Filterschlauchs 62 vor Verschleiß geschützt werden.

Das Filtergewebe 61 des zweiten Filterelementes 60 ist bevorzugt in Köperbindung gemäß Fig. 5 oder zweckmäßig in Atlasbindung gemäß Fig. 6 gefertigt. Dabei wird das Filtergewebe 61 mit einer Maschenweite W gefertigt, die größer als 10 µm und kleiner als 25 µm ist. Bevorzugt weist das Filtergewebe 61 eine Maschenweite W im Bereich von 12 µm bis 20 µm auf. In einer bevorzugten Ausführungsform hat das Filtergewebe 61 eine Maschenweite W von 15 µm.

Die Maschenweite W des Filtergewebes 61 ist kleiner als die Porengröße P des ersten - insbesondere inneren - Filterelementes 50 (Fig. 4). Die Fadenstärke F des Filtergewebes 61 liegt im Bereich von 35 µm.

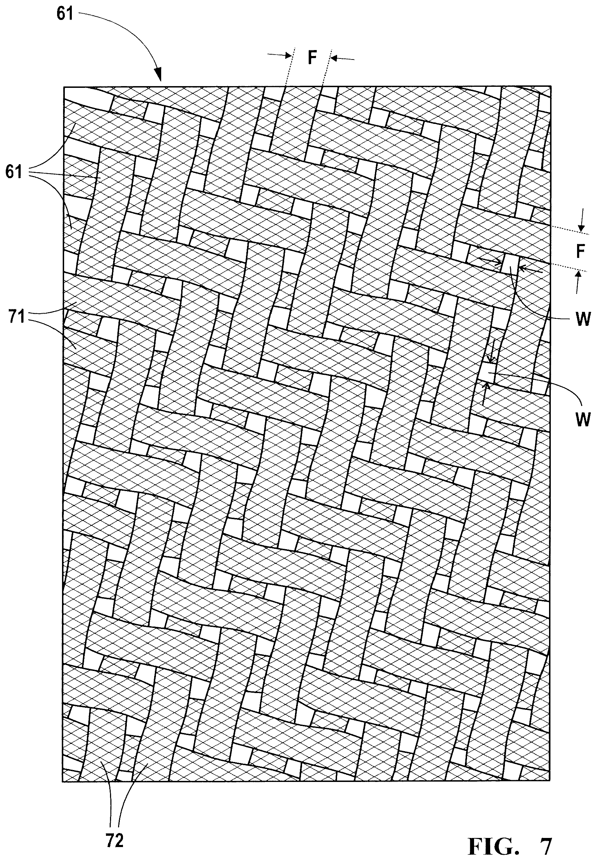

Das aus vorteilhaft monofilen Einzelfäden 70 gefertigte Filtergewebe 61 hat insbesondere eine Gewebestruktur in Köperbindung, wie sie in Fig. 7 dargestellt ist. Die Einzelfäden 70 bestehen vorteilhaft aus Polyamid.

Die in Fig. 7 gezeigte Köperbindung hat die Bindungsformel K2/2. Ein Schussfaden 71 untergreift bzw. übergreift in abwechselnder Folge jeweils zwei Kettfäden 72. Entsprechend untergreifen bzw. übergreifen die Kettfäden 72 wechselweise jeweils zwei Schussfäden 71, wie in Fig. 7 dargestellt. Die Einzelfäden 70 haben eine Fadenstärke von 35 µm, wobei eine Maschenweite W zwischen 10 µm und 25 µm ausgebildet wird. Zweckmäßig ist eine Maschenweite W von 15 µm vorgesehen.

Aus Fig. 7 wird auch deutlich, dass das Filtergewebe 61 keine glatte Oberfläche aufweist, sondern eine dreidimensionale Struktur hat. Dies ist für die Aufrechterhaltung der Filterwirkung über eine lange Betriebsdauer vorteilhaft, da die Filterwirkung nicht nur in der Ebene, sondern auch in der Tiefe des Filtergewebes 61 stattfindet. Aufgrund der dreidimensionalen Struktur des erfindungsgemäßen Filtergewebes 61 wird der Bildung eines Filterkuchens entgegengewirkt; mögliche Bewegungen des Saugkopfes 20 aufgrund seiner Halterung an einem freien Ende 9 des flexiblen Kraftstoffschlauches 14 und insbesondere die Schwingungsanregungen aufgrund der Vibrationen des Verbrennungsmotors wirken einem Festsetzen von Schmutzteilchen entgegen. Diese Bewegungen und Schwingungen führen zu einem Abwerfen von auf dem Filtergewebe 61 abgesetzten Schmutzteilchen. Da die Schmutzteilchen untereinander aufgrund der dreidimensionalen Gewebestruktur an der Bildung eines Filterkuchens gehindert sind, kann über eine lange Betriebsdauer die Funktion des Saugkopfes 20 bei geringem Strömungswiderstand gewährleistet werden.

## Patentansprüche

1. Saugkopf zum Anschluss an einen Kraftstoffschlauch (14) in einem Kraftstofftank (15),
- wobei der Saugkopf (20) einen gehäuseförmigen Grundkörper (22) aus einem Spritzgussmaterial (49) aufweist,
- und der Grundkörper (22) mit einer stirnseitigen Öffnung (24) ausgebildet ist,
- wobei die stirnseitige Öffnung (24) mittels einer Kappe (27) verschlossen ist,
- und der Saugkopf (20) einen Anschlussstutzen (21) für den Kraftstoffschlauch (14) umfasst,
- und über den Kraftstoffschlauch (14) und den Saugkopf (20) Kraftstoff angesaugt wird,
- wobei in dem Grundkörper (22) ein erstes, inneres Filterelement (50) aufgenommen ist,
- und der Grundkörper (22) in seiner Mantelfläche (26) Aussparungen (30, 31, 32, 33) aufweist, die durch ein zweites, äußeres Filterelement (60) abgedeckt sind,
**dadurch gekennzeichnet,**
- **dass** das zweite, äußere Filterelement (60) aus einem in Köperbindung oder Atlasbindung gefertigten Filtergewebe (61) besteht, so dass eine dem anströmenden Kraftstoff zugewandte Gewebefläche rau und mehrdimensional strukturiert ist,
- und **dass** das Filtergewebe (61) mit einer Maschenweite (W) größer als 10 µm und kleiner als 25 µm ausgebildet ist,
- wobei die Maschenweite (W) des Filtergewebes (61) kleiner ist als eine Porengröße (P) des ersten, inneren Filterelementes (50) im Grundkörper (22).

2. Saugkopf nach Anspruch 1,
**dadurch gekennzeichnet, dass** das Filtergewebe (61) eine Maschenweite (W) im Bereich von 12 µm bis 20 µm aufweist.

3. Saugkopf nach Anspruch 2,
**dadurch gekennzeichnet, dass** das Filtergewebe (61) eine Maschenweite (W) von 15 µm aufweist.

4. Saugkopf nach Anspruch 1,
**dadurch gekennzeichnet, dass** die Aussparungen (30, 31, 32, 33) in der Mantelfläche (26) des Grundkörpers (22) durch Stege (40, 41, 42, 43) voneinander getrennt sind, und das Filtergewebe (61) an den Stegen (40, 41, 42, 43) gehalten ist.

5. Saugkopf nach Anspruch 4,
**dadurch gekennzeichnet, dass** im Bereich der Stege (40, 41, 42, 43) das Spritzgussmaterial (49) des Grundkörpers (22) in die Gewebestruktur des Filtergewebes (61) formschlüssig eingreift.

6. Saugkopf nach Anspruch 1,
**dadurch gekennzeichnet, dass** das Filtergewebe (61) als Filterschlauch (62) mit einem ersten offenen Ende (63) und einem zweiten offenen Ende (64) ausgebildet ist, wobei ein Ende (63) des Filterschlauches (62) im Spritzgussmaterial (49) des Grundkörpers (22) stoffdicht eingebunden ist.

7. Saugkopf nach Anspruch 6,
**dadurch gekennzeichnet, dass** das Filtergewebe (61) am Ende (63) des Filterschlauches (62) von dem Spritzgussmaterial (49) des Grundkörpers (22) formschlüssig durchdrungen ist.

8. Saugkopf nach Anspruch 1,
**dadurch gekennzeichnet, dass** die Porengröße (P) des ersten Filterelementes (50) im Bereich von 30 µm bis 70 µm liegt.

9. Saugkopf nach Anspruch 1,
**dadurch gekennzeichnet, dass** das Spritzgussmaterial (49) ein Kunststoff ist.

10. Saugkopf nach Anspruch 1,
**dadurch gekennzeichnet, dass** das Filtergewebe (61) ein Siebgewebe aus monofilen Einzelfäden (70) ist.

11. Saugkopf nach Anspruch 10,
**dadurch gekennzeichnet, dass** eine Fadenstärke (F) der Einzelfäden (70) größer ist als die Maschenweite (W) des Filtergewebes (61).

12. Arbeitsgerät mit einem Viertaktmotor (2), mit einem Ventiltrieb (5) für ein im Brennraum (11) des Viertaktmotors (2) angeordnetes Ein- und/oder Auslassventil (6, 7), wobei der Ventiltrieb (5) durch ein mit Verbrennungsluft aufbereitetes Kraftstoff/Öl-Gemisch geschmiert ist, und das Kraftstoff/Öl-Gemisch über eine Kraftstoffleitung aus einem Kraftstofftank (15) des Arbeitsgerätes (1) einer Gemischbildungseinrichtung (10) zugeführt ist, wobei die Kraftstoffleitung mit einem flexiblen Kraftstoffschlauch (14) in den Kraftstofftank (15) einragt, und das einragende freie Ende (86) des flexiblen Kraftstoffschlauchs (14) an einen Anschlussstutzen (21) des Saugkopfes (20) nach Anspruch 1 angeschlossen ist.

## Claims

1. Suction head for connection to a fuel hose (14) in a fuel tank (15),
- wherein the suction head (20) has a housing-shaped base body (22) made of an injection-moulding material (49),
- and the base body (22) is designed with an end-face opening (24),
- wherein the end-face opening (24) is closed by means of a cap (27),
- and the suction head (20) comprises a connector (21) for the fuel hose (14),
- and fuel is drawn in via the fuel hose (14) and the suction head (20),
- wherein a first, inner filter element (50) is accommodated in the base body (22),
- and the base body (22) has in its outer surface (26) recesses (30, 31, 32, 33) covered by a second, outer filter element (60),
**characterised in that**
- the second, outer filter element (60) consists of a filter fabric (61) made in twill or satin weave, so that a fabric surface facing the flowing fuel has a rough and multidimensional structure,
- and **in that** the filter fabric (61) has a mesh size (W) greater than 10 µm and less than 25 µm,
- wherein the mesh size (W) of the filter fabric (61) is less than a pore size (P) of the first, inner filter element (50) in the base body (22).

2. Suction head according to claim 1,
**characterised in that** the filter fabric (61) has a mesh size (W) in the range of 12 µm to 20 µm.

3. Suction head according to claim 2,
**characterised in that** the filter fabric (61) has a mesh size (W) of 15 µm.

4. Suction head according to claim 1,
**characterised in that** the recesses (30, 31, 32, 33) in the outer surface (26) of the base body (22) are separated from one another by webs (40, 41, 42, 43) and the filter fabric (61) is held at the webs (40, 41, 42, 43).

5. Suction head according to claim 4,
**characterised in that** the injection-moulding material (49) of the base body (22) positively engages with the fabric structure of the filter fabric (61) in the region of the webs (40, 41, 42, 43).

6. Suction head according to claim 1,
**characterised in that** the filter fabric (61) is designed as a filter tube (62) with a first open end (63) and a second open end (64), wherein one end (63) of the filter tube (62) is materially incorporated into the injection-moulding material (49) of the base body (22).

7. Suction head according to claim 6,
**characterised in that** the filter fabric (61) is positively penetrated by the injection-moulding material (49) of the base body (22) at the end (63) of the filter tube (62).

8. Suction head according to claim 1,
**characterised in that** the pore size (P) of the first filter element (50) lies in the range of 30 µm to 70 µm.

9. Suction head according to claim 1,
**characterised in that** the injection-moulding material (49) is a plastic material.

10. Suction head according to claim 1,
**characterised in that** the filter fabric (61) is a screen cloth of monofilamentous individual threads (70).

11. Suction head according to claim 10,
**characterised in that** a thread size (F) of the individual threads (70) is greater than the mesh size (W) of the filter fabric (61).

12. Working implement with a four-stroke engine (2), with a valve train (5) for an intake and/or exhaust valve (6, 7) located in the combustion chamber (11) of the four-stroke engine (2), wherein the valve train (5) is lubricated by a fuel/oil mixture conditioned with combustion air and the fuel/oil mixture is fed to a mixture formation device (10) from a fuel tank (15) of the working implement (1) via a fuel pipe, wherein the fuel pipe projects into the fuel tank (15) with a flexible fuel hose (14) and the projecting free end (86) of the flexible fuel hose (14) is connected to a connector (31) of the suction head (20) according to claim 1.

## Revendications

1. Crépine d'aspiration à raccorder à un tuyau de carburant (14) dans un réservoir de carburant (15),
- dans laquelle la crépine d'aspiration (20) comporte un corps de base en forme de boîtier (22) en matériau moulé par injection (49),
- et le corps de base (22) est formé avec une ouverture frontale (24),
- dans laquelle l'ouverture frontale (24) est fermée à l'aide d'un couvercle (27),
- et la crépine d'aspiration (20) comprend une tubulure de raccordement (21) pour le tuyau de carburant (14),
- et du carburant est aspiré par le tuyau de carburant (14) et la crépine d'aspiration (20),
- dans laquelle un premier élément filtrant (50) intérieur est logé dans le corps de base (22),
- et le corps de base (22) présente dans sa surface latérale (26) des évidements (30, 31, 32, 33) qui sont couverts par un deuxième élément filtrant (60) extérieur,
**caractérisé**
- **en ce que** le deuxième élément filtrant (60) extérieur se compose d'un tissu filtrant (61) fabriqué en serge ou en satin, de sorte qu'une surface de tissu tournée vers le carburant affluant est rugueuse et a une structure pluridimensionnelle,
- et **en ce que** le tissu filtrant (61) est formé avec une largeur de maille (W) supérieure à 10 µm et inférieure à 25 µm,
- dans laquelle la largeur de maille (W) du tissu filtrant (61) est inférieure à une grandeur de pore (P) du premier élément filtrant (50) intérieur dans le corps de base (22).

2. Crépine d'aspiration selon la revendication 1,
**caractérisée en ce que** le tissu filtrant (61) présente une largeur de maille (W) située dans la plage de 12 µm à 20 µm.

3. Crépine d'aspiration selon la revendication 2,
**caractérisée en ce que** le tissu filtrant (61) présente une largeur de maille (W) de 15 µm.

4. Crépine d'aspiration selon la revendication 1,
**caractérisée en ce que** les évidements (30, 31, 32, 33) dans la surface latérale (26) du corps de base (22) sont séparés les uns des autres par des barrettes (40, 41, 42, 43), et le tissu filtrant (61) est tenu au niveau des barrettes (40, 41, 42, 43).

5. Crépine d'aspiration selon la revendication 4,
**caractérisée en ce que** dans la zone des barrettes (40, 41,42, 43), le matériau moulé par injection (49) du corps de base (22) pénètre par complémentarité de forme dans la structure tissée du tissu filtrant (61).

6. Crépine d'aspiration selon la revendication 1,
**caractérisée en ce que** le tissu filtrant (61) est formé comme un tuyau filtrant (62) avec une première extrémité ouverte (63) et une deuxième extrémité ouverte (64), dans laquelle une extrémité (63) du tuyau filtrant (62) est intégrée d'un seul tenant dans le matériau moulé par injection (49) du corps de base (22).

7. Crépine d'aspiration selon la revendication 6,
**caractérisée en ce que** le tissu filtrant (61), à l'extrémité (63) du tuyau filtrant (62), est traversé par complémentarité de forme par le matériau moulé par injection (49) du corps de base (22).

8. Crépine d'aspiration selon la revendication 1,
**caractérisée en ce que** la grandeur de pore (P) du premier élément filtrant (50) est située dans la plage de 30 µm à 70 µm.

9. Crépine d'aspiration selon la revendication 1,
**caractérisée en ce que** le matériau moulé par injection (49) est une matière plastique.

10. Crépine d'aspiration selon la revendication 1,
**caractérisée en ce que** le tissu filtrant (61) est un tissu à tamis en fils individuels monofilaments (70).

11. Crépine d'aspiration selon la revendication 10,
**caractérisée en ce qu'**une épaisseur de fil (F) des fils individuels (70) est supérieure à la largeur de maille (W) du tissu filtrant (61).

12. Appareil avec un moteur à quatre temps (2), avec une commande de vanne (5) pour une vanne d'entrée et/ou de sortie (6, 7) disposée dans la chambre de combustion (11) du moteur à quatre temps (2), dans lequel la commande de vanne (5) est lubrifiée par un mélange carburant/huile préparé avec de l'air de combustion, et le mélange carburant/huile est amené par une conduite de carburant d'un réservoir de carburant (15) de l'appareil (1) jusqu'à un dispositif de formation de mélange (10), dans lequel la conduite de carburant dépasse avec un tuyau de carburant flexible (14) dans le réservoir de carburant (15), et l'extrémité libre (86) du tuyau de carburant flexible (14) qui dépasse est raccordée à une tubulure de raccordement (21) de la crépine d'aspiration (20) selon la revendication 1.
